# EUROPÄISCHE PATENTANMELDUNG

(11) **EP 2 353 846 A1**
(43) Veröffentlichungstag der Anmeldung: **10.08.2011**
(21) Anmeldenummer: 10190217.9
(22) Anmeldetag: 05.11.2010
(51) Int. Cl.: B29C 65/20, E04B 1/76

(54) **Verfahren zur Herstellung von Dämmplatten**

(30) Priorität: 28.01.2010 CH 1032010
(71) Anmelder: Sager AG, 5724 Dürrenäsch (CH)
(72) Erfinder: Speck, Daniel, 5734 Reinach (CH)
(74) Vertreter: Feldmann, Clarence Paul

(57) **Zusammenfassung**

Die Erfindung betrifft ein Verfahren zur Herstellung von Dämmplatten, insbesondere zur Wärmeisolation von Aussenfassaden, Wänden oder anderen Teilen von Gebäuden aus expandiertem Polystyrol (EPS) bestehend aus einer Reflektorplatte (1) und einer Deckplatte (2), deren Herstellung deutlich vereinfacht werden soll.

Dies ist dadurch gelöst, dass die sich gegenüberliegenden Flächen der Reflektorplatte (1) und der Deckplatte (2) durch Erwärmung und nachfolgendes andrücken vollflächig unter Bildung einer Kontaktfläche (3) miteinander verbunden werden.

## Beschreibung

Die Erfindung betrifft ein Verfahren zur Herstellung von Dämmplatten, insbesondere von Dämmplatten zur Wärmeisolation von Aussenfassaden, Wänden oder anderen Teilen von Gebäuden aus expandiertem Polystyrol (EPS), umfassend eine Reflektorschicht und eine Deckschicht.

Die Erfindung betrifft weiterhin eine Vorrichtung zur Herstellung von derartigen Dämmplatten.

Dämmplatten aus expandiertem Polystyrol zur Isolation von Gebäudeteilen u. a. sind hinlänglich bekannt. Sie werden z. B. durch Expansion von Styrolpolymerisatpartikeln in Dampfkammern und nachfolgenden Zuschnitt hergestellt.

Hauptsächlich werden Dämmplatten aus pigmentfreien Styrolpolymerisatpartikeln hergestellt.

Zwecks Verbesserung der Dämmwirkung werden neben dickeren Platten zunehmend auch noch solche hergestellt, die ergänzend Partikel mit dunklen Pigmenten enthalten, z. B. aus Russ, Farbstoffen, Grafit u. a. Der Anteil der pigmentierten Styrolpolymerisatpartikel kann 10-90 Gew.-% betragen (DE-U-20315226 und EP-A-2010601, siehe auch EP-A-0981574, bei der eine Verteilung 50:50 als besonders vorteilhaft angesehen wird).

Gemäss EP-A-1815077 können die Dämmplatten dabei auch aus zwei Teilen bestehen, einem Teil mit überwiegender Dämmwirkung, der aus einem grauen expandierten Polystyrol besteht und athermane Stoffe für eine zusätzliche Funktion enthält und einem zweiten Teil aus Hartschaum mit wenigstens einer weiteren Schutzeigenschaft. Die athermanen Stoffe können wiederum Russ, Grafit u. a. sein und die als Infrarotabsorber bzw. -reflektoren fungieren. Der andere Plattenteil erfüllt z. B. eine Schallschutzfunktion. Beide Teile sind thermisch miteinander verbunden, bezeichnet als thermisches verschweissen, bei dem erhitzte Metallnadeln die aufeinanderliegenden Teile durchstechen. Dadurch werden im Umfeld der Nadeln verbindende Kontaktflächen gebildet. Die Anzahl der Kontaktflächen entspricht der Anzahl der Nadeln und es entsteht keine durchgehende Verbindungsfläche der Teile. Es ist weiterhin bekannt, eine dunkle Reflektorplatte zwischen zwei weissen Deckplatten anzuordnen.

Bei einer ähnlichen Dämmplatte gemäss DE-U-8226114, die insbesondere für Flachdächer verwendet wird, besteht die Platte aus einer dämmenden Grundschicht aus Hartschaum und einer nach aussen gerichteten Schutzschicht aus einem Fasermaterial. In der EP-A-1213118 ist ein Verfahren zur Herstellung einer Schaumstoffplatte offenbart, die aus zwei Ausgangsplatten gebildet wird. Die Ausgangsplatten, die an den Berührungsflächen extrusionshautlos sein sollen, werden mittels eines diffusionsoffenen Klebers und oder durch mechanische Verbindungselemente teilflächig miteinander verbunden. Die mechanischen Verbindungselemente bestehen dabei bevorzugt aus dem Werkstoff der Ausgangsplatten.

Die Aufgabe der Erfindung besteht nun darin, ein Verfahren zur Herstellung von Dämmplatte, insbesondere zur Wärmeisolation von Aussenfassaden, Wänden oder anderen Teilen von Gebäuden vollständig aus expandiertem Polystyrol (EPS), umfassend eine Reflektorschicht und eine Deckschicht zu schaffen, die unterschiedliche Schutzfunktionen erfüllen, wobei eine gute Haftung zwischen den Schichten resp. Platten und eine gute Masshaltigkeit bei geringem Aufwand erreicht werden sollen.

Die Aufgabe ist mit den Merkmalen des Patentanspruchs 1 gelöst.
Erfindungsgemäss wird eine Deckplatte etwa parallel zu einer Reflektorplatte zugeführt und nachfolgend werden die sich gegenüberliegenden Flächen gleichzeitig soweit erwärmt, dass durch Andrücken dieser Flächen eine feste Verbindung zwischen beiden Platten erreicht wird. Die Erwärmung wird mittels Spiegelschweissen ausgeführt und dabei wird auf den erwärmten Flächen ein schmelzflüssiger Film ausgebildet. Die Verbindung erfolgt kleberfrei und somit vollflächig. Bevorzugte Ausführungsformen sind in den abhängigen Ansprüchen offenbart. Die Erwärmungstemperatur beträgt vorzugsweise ca. 195°C.
Reflektorplatte und Deckplatte weisen als Ausgangsplatten ein Übermass auf, das infolge des Anschmelzens und Verbindens eliminiert wird. Die so gefertigte Dämmplatte weist dann das geforderte Nennmass auf.

Die Dämmplatte besteht somit aus zwei Platten, d. h. einer dunklen und dämmenden Reflektorplatte und einer Deckplatte mit einer zusätzlichen Schutzfunktion, die kleberfrei und vollflächig miteinander verbunden sind.

Die dämmende Reflektorplatte enthält in bekannter Weise dunkle Pigmente enthaltende Partikel, insbesondere Grafitpartikel. Die Reflektorplatte ist der zu dämmenden Wand o. dgl. zugewandt.

Die Deckplatte besteht vollständig aus pigmentfreien Partikeln oder wenig pigmentierten Partikeln und ist nach aussen gewandt, wobei die Deckplatte deutlich dünner als die dämmende Reflektorplatte ist, in einem Verhältnis kleiner 10:90.
Die Dämmplatte ist eine Verbundplatte aus weissem und pigmentiertem EPS.

Der Erfindung liegt weiterhin die Aufgabe zugrunde, eine Vorrichtung zur Herstellung von Dämmplatten aus expandiertem Polystyrol (EPS) zu entwickeln, die ein einfaches Verbinden der Ausgangsplatten ermöglicht.

Diese Aufgabe ist mit den Merkmalen des Patentanspruchs 6 gelöst. Erfindungsgemäss weist die Vorrichtung Elemente zur etwa parallelen Zuführung der weissen und pigmentierten Ausgangsplatten sowie eine nachgeordnete Heiz- und Andrückelemente auf, so dass im Ergebnis die erfindungsgemässe Dämmplatte entsteht.
In bevorzugter Ausbildung der Vorrichtung ist das Heizelement ein Heizschwert und das Andrückelement weist mindestens eine Andruckwalze auf.
Bevorzugt mittels eines endlos umlaufenden Bandes, das auch die mindestens eine Andruckrolle umschliesst, erfolgt die Zuführung der weissen Deckplatte.
Vorzugsweise ist dem Andrückelement eine übliche Schneideinrichtung zum Einschneiden der Deckplatte nachgeordnet.

Mit der Erfindung wird mit geringem Aufwand das Problem gelöst, dass dunkle, pigmententhaltende, dickere Reflektorplatten (Dämmplatten) aus EPS zwar eine bessere Dämmung als pigmentfreie Platten aus EPS aufweisen, doch bei Sonneneinstrahlung resp. Temperaturunterschieden eine geringere Formstabilität aufweisen. Die Deckschicht wirkt als Barriere für die Dämmschicht, so dass eine höhere Formstabilität erreicht wird und nur in geringerem Masse dämmend.

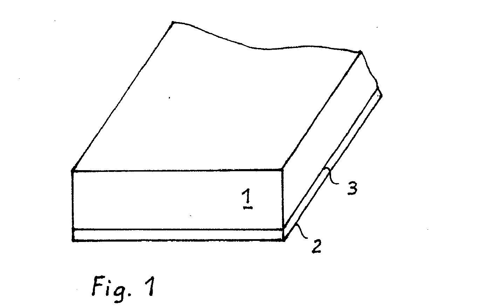

Die Erfindung wird nachfolgend in einem Ausführungsbeispiel anhand einer Zeichnung näher beschrieben. In der Zeichnung zeigen die
Fig. 1: eine Dämmplätte

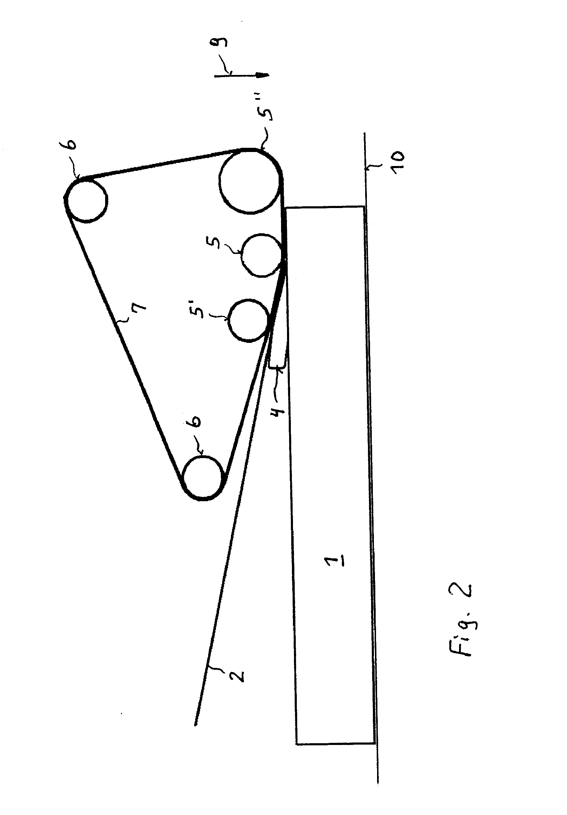

Fig. 2: eine Vorrichtung zur Herstellung von Dämmplatten.

EPS-Platten werden in bekannter Weise durch Expansion von Styrolpolymerisatpartikeln in Dampfkammern hergestellt. Gefertigt werden sowohl Deckplatten 2, die nur Styrolpolymerisatpartikel oder wenig pigmentierte Styrolpolymerisatpartikel enthalten, als auch höher dämmende Reflektorplatten 1, die pigmentierte Styrolpolymerisatpartikel aufweisen.

Eine Reflektorplatte 1 wird parallel einem Maschinentisch 10 auf einem Förderband der Vorrichtung zur Herstellung von Dämmplatten horizontal zugeführt. Darüber werden mittels nicht dargestellter Fördermittel oder durch manuelle Zuführung über eine geneigte Rutsche die wesentlich dünneren Deckplatten 2 zugeführt. Diese dünneren Deckplatten 2 sind biegsam, so dass sie sich von der Rutsche auf die eben zugeführte Reflektorplatte 1 um die Krümmung einer Andrückwalze 5 verformen lässt. Der Andrückwalze 5 unmittelbar vorgelagert ist im Bereich der Zusammenführung ein im Querschnitt keilförmiges Heizschwert 4. Das Heizschwert 4 ist ölbeheizt und soll eine gleichmässige Erwärmung der kontaktierten Oberflächen der Platten 1, 2 auf ca. 195°C ermöglichen. Das Heizschwert 4 ist z. B. teflonbeschichtet und kann aus einem Aluminiumwerkstoff bestehen.
Mittels mindestens einer weiteren Andrückwalze 5' wird die Deckplatte 2 gegen das Heizschwert 4 gedrückt.
Zur Abstützung der Deckplatte 2 ist eine Stützrolle 8 vorgesehen. Die Deckplatte 2 weist eine Ausgangsdicke von ca. 6,5 mm auf, die Reflektorplatte 1 eine Ausgangsdicke von beispielsweise 158 mm, d. h. zwei Millimeter unterhalb des Nennmasses der herzustellenden Dämmplatte.
Auf das Heizschwert 4 folgen bei der hier dargestellten Anlage zwei Andrückwalzen 5, 5" die auf gleicher Höhe nacheinander angeordnet sind. Die rechts liegende Andrückwalze 5" ist zugleich Antriebswalze. Auf die Andrückwalzen 5, 5" folgt beabstandet eine übliche Schneideinrichtung 9 zur Einbringung von Entlastungsschnitten in die Deckplatte 2.

Die Stützrolle 8 und die Andrückwalzen 5, 5', 5" sowie eine Umlenkrolle 6 sind von einem endlos umlaufenden und temperaturbeständigen Führungsband 7 mit rauer Oberfläche umfasst, das der Zuführung der Deckplatte 2 dient. Die Zuführung der Reflektorplatte 1 zum Heizschwert 4 kann ebenfalls mittels eines, nicht dargestellten Transportbandes, einer Vorschubeinheit o. a. erfolgen.
Mittels Walzendruck der Andrückwalzen und Einstellung der Arbeitshöhe wird das erforderliche Dickennennmass der Dämmplatte erreicht.
Die kontaktierten Oberflächen der Platten 1, 2 schmelzen infolge der Erwärmung an und es wird ein schmelzflüssiger Film ausgebildet ("benetzen" durch Erwärmung bis oberhalb der Erweichungstemperatur), der zugleich eine Verringerung der Plattenstärke bewirkt. Unter Bildung der Kontaktfläche 3 wird die Deckplatte 2 durch die Andrückwalzen 5 gegen die Reflektorplatte 1 gedrückt, wobei infolge des anschmelzens und nachfolgenden andrückens der Platten 1, 2 die Dämmplatte mit einer Dicke von beispielsweise 160 mm und einem Lambdawert von < 0,03 entsteht.

### Bezugszeichen

- 1: Reflektorplatte
- 2: Deckplatte
- 3: Kontaktfläche
- 4: Heizschwert
- 5: Andrückwalze
- 5': Andrückwalze
- 5": Andrückwalzen
- 6: Umlenkrolle
- 7: Führungsband
- 8: Stützrolle
- 9: Schneideinrichtung
- 10: Maschinentisch

## Patentansprüche

1. Verfahren zur Herstellung von Dämmplatten aus expandiertem Polystyrol (EPS), die eine dämmende Schicht resp. Reflektorplatte (1) und eine Deckschicht resp. Deckplatte (2) mit einer zusätzlichen Schutzfunktion umfassen,
**dadurch gekennzeichnet, dass** in einem ersten Schritt die Platten (1, 2), die zusammen eine grössere Dicke als das Nennmass der herzustellenden Dämmplatte aufweisen, zueinander zugeführt werden und die sich gegenüberliegenden Flächen der Platten (1, 2) gleichzeitig erwärmt werden und nachfolgend diese Flächen unter Ausbildung einer Kontaktfläche (3) gegeneinander gedrückt werden und die Flächen somit vollflächig verbunden werden und eine Dämmplatte mit Nennmass ergeben.

2. Verfahren nach Anspruch 1, **dadurch gekennzeichnet, dass** die Verbindung der Platten (1) und (2) unter Druck erfolgt, wobei die Flächen bis oberhalb der Erweichungstemperatur des EPS erwärmt werden.

3. Verfahren nach Anspruch 1 oder 2, **dadurch gekennzeichnet, dass** die Deckplatte (2) nachfolgend längs und/oder quer eingeschnitten wird.

4. Verfahren nach Anspruch 1, **dadurch gekennzeichnet, dass** die Dicke der Deckplatte (2) weniger als 10% der Dicke der Reflektorplatte (1) beträgt.

5. Verfahren nach mindestens einem der Ansprüche 1 bis 4, **dadurch gekennzeichnet, dass** eine Reflektorplatte (1) beliebiger Stärke auf beiden Längsseiten unter Ausbildung einer Kontaktfläche (3) mit einer Deckplatte (1) verbunden wird.

6. Vorrichtung zur Herstellung von Dämmplatten aus expandiertem Polystyrol (EPS), die eine dämmende Schicht resp. Reflektorplatte (1) und eine Deckschicht resp. Deckplatte (2) mit einer zusätzlichen Schutzfunktion aufweist, wobei die Vorrichtung Mittel zum separaten Zuführen der Platten (1, 2) und zum vollflächigen Verbinden jeweils einer Reflektorplatte (1) mit einer Deckplatte (2) aufweist,
**dadurch gekennzeichnet, dass** die Vorrichtung eine Erwärmungseinheit zur vollflächigen Erwärmung der Flächen der Platten (1, 2), die eine resultierende Kontaktfläche (3) bilden und nachfolgende Andrückelemente zum Andrücken und Verbinden der Platten (1, 2) umfasst.

7. Vorrichtung nach Anspruch 6, **dadurch gekennzeichnet, dass** die Erwärmungseinheit ein Heizschwert (4) ist.

8. Dämmplatte, hergestellt nach einem der Ansprüche 1 bis 5,
**dadurch gekennzeichnet, dass** sie eine Reflektorplatte (1) und eine Deckplatte (2) mit einer zusätzlichen Schutzfunktion umfasst, die kleberfrei und vollflächig auf Nennmass der Plattenstärke miteinander verbunden sind.
